# EUROPÄISCHE PATENTANMELDUNG

(11) **EP 1 374 677 A1**
(43) Veröffentlichungstag der Anmeldung: **02.01.2004**
(21) Anmeldenummer: 03006378.8
(22) Anmeldetag: 20.03.2003
(51) Int. Cl.: A01M 29/00

(54) **Vogelabweiser sowie Montagestange hierfür**

(30) Priorität: 18.06.2002 DE 10227145
(71) Anmelder: Elektrotechnische Werke Fritz Driescher & Söhne GmbH, 85368 Moosburg (DE)
(72) Erfinder: Leitsch, Franz, 85368 Moosburg (DE)
(74) Vertreter: Kuhnen & Wacker

(57) **Zusammenfassung**

Die Erfindung betrifft einen Vogelabweiser (1) für Mittel- und Hochspannungs-Freileitungen, mit einer Abweisvorrichtung (2) sowie einer Lagervorrichtung (3) zur Befestigung der Abweisvorrichtung (2) an einen Querträger (Q) eines Freileitungsmastens. Hierbei weist die Lagervorrichtung (3) ein Lagergestell (31) sowie eine Haltevorrichtung (32) auf, wobei das Lagergestell (31) derart mit einer Einführöffnung versehen ist, daß es auf den Querträger (Q) aufsetzbar ist und diesen zum temporären Sichern des Vogelabweisers (1) gegen Herabfallen umgreift, und wobei die Haltevorrichtung (32) zum Fixieren des Lagergestells (31) am Querträger (Q) von der der Abweisvorrichtung (2) gegenüber liegenden Seite des Vogelabweisers (1) zugänglich ist. In einer bevorzugten Ausführungsform ist dem Vogelabweiser (1) ferner eine Montagestange (4) zugeordnet, welche mit der Haltevorrichtung (32) zur Führung und Fixierung der Lagervorrichtung (3) am Querträger (Q) zusammenwirkt. Damit wird erfindungsgemäß eine wesent-liche Vereinfachung des Montagevorgangs für einen Vogelabweiser (1) erzielt, wobei eine Gefährdung für die die Montage durchführende Person durch spannungsführende Teile weitestgehend vermieden werden kann.

## Beschreibung

Die Erfindung betrifft einen Vogelabweiser für Mittel- und Hochspannungs-Freileitungen gemäß dem Oberbegriff des Anspruches 1 sowie eine Montagestange hierfür gemäß Anspruch 10.

Es kommt in der Praxis bedauerlicherweise wiederholt vor, daß größere Vögel wie Störche, Habichte etc. durch Stromschläge getötet werden, wenn sie Sitzgelegenheiten im Bereich von Mittel- und Hochspannungs-Freileitungen suchen. So haben Untersuchungen verschiedener Natur- und Umweltschutzverbände sowie der Elektrizitätsversorgungsunternehmen gezeigt, daß bestimmte Mastkonstruktionen und Seilanordnungen bei Mittelspannungsleitungen und auch bei Hochspannungsleitungen eine Gefährdung für Großvögel darstellen können. Dabei bieten vor allem die zumeist dreipolig aufgebauten Freiluftschalter für Hochspannungsanlagen zwischen den einzelnen Polen oder Phasen ideale Rast- und Jagdplätze gerade auch für größere Vögel. Beim An- bzw. Abfliegen der Vögel kann es dann bei ausgebreiteten Flügeln zur Überbrückung von zwei Leitern kommen und bei dem dadurch entstehenden Lichtbogenüberschlag werden die Tiere entweder sofort getötet oder aber sie erleiden starke Verbrennungen und verenden grausam. Ferner kann es auch vorkommen., daß durch Berührung eines Leiters über den geerdet stehenden Vogel ein Erdschluß eingeleitet wird.

Da von diesem Sachverhalt in erster Linie nur größere Vögel betroffen sind, die darüber hinaus teilweise oder ganz unter Naturschutz stehen, wie Störche oder Raubvögel, haben sich Vogel- und Tierschützer jahrelang darum bemüht, daß entsprechende Vogelschutzbestimmungen in die VDE-Vorschriften aufgenommen werden. Daher schreibt die VDE-Vorschrift 0210 bereits seit dem 1. Dezember 1985 folgendes vor: "Querträger, Isolatorenstützen und sonstige Bauteile der Starkstrom-Freileitungen sind so auszubilden, daß den Vögeln keine Sitzgelegenheit in gefahrbringender Nähe der unter Spannung stehenden Leiter gegeben wird."

Um dieser Bestimmung gerecht zu werden, sind aus der Praxis verschiedene Vorgehensweisen bekannt: So versehen manche Hersteller die betreffenden Komponenten wie die Leiterseile und Isolatoren mit elektrisch isolierenden Abdeckungen bzw. Hauben aus Kunststoff. Ferner ist es auch bekannt, Kunststoffschläuche als zusätzliche Isolierung an den Leiterseilen vorzusehen. Während derartige Maßnahmen noch mit relativ praktikablem Aufwand bei der Errichtung neuer Anlagen ergriffen werden können, ist jedoch insbesondere eine Nachrüstung bzw. ein Austausch der Abdeckungs- bzw. Isolationselemente mit schwerwiegenden Nachteilen verbunden. So ist dies generell nur möglich, wenn die Leitungen spannungsfrei geschaltet sind, was jedoch Versorgungsausfälle verursacht und nur auf begrenzte Akzeptanz bei den Stromkunden trifft sowie insgesamt teuer und aufwendig in der Ausführung ist. Dabei ist ein Austausch derartiger Abdeckungselemente jedoch im Abstand von einigen Jahren zwingend erforderlich, da der hierfür verwendete Kunststoff nur begrenzt UV-beständig ist. Er wird daher im Laufe der Zeit brüchig und kann seine Isolationsfunktion nicht mehr zuverlässig ausführen. Somit kann es auch zu Entladungen zwischen den Teilen kommen, was die Sicherheit zusätzlich gefährdet.

Ferner ist es bekannt, Abweisstützen oder -stangen an Freileitungsmasten vorzusehen. Derartige Abweisvorrichtungen sind z. B. als ca. 75 cm hohe Kunststoffrohre ausgebildet, von denen jeweils eines mittig zwischen zwei Polen senkrecht auf dem die Pole tragenden Querträger montiert sind und somit den Freiraum zwischen den beiden Polen für anfliegende größere Vögel versperren. Derartige Abweisstützen kommen bei Freileitungsmasten mit relativ geringem Polabstand zum Einsatz. Bei sogenannten Weitspannsystem, bei denen die Pole in größerem Abstand zueinander angeordnet sind und der Querträger nicht in Form eines Stahl-Normprofiles vorliegt, sondern aus Beton gefertigt ist, kommen häufig Abweisstangen zum Einsatz. Annähernd mittig zwischen je zwei Polen wird ein Befestigungsschuh mit Stahlbändern am Querträger fixiert, wonach in den Befestigungsschuh je eine aufrechtstehende Stütze eingeführt und befestigt wird. Im rechten Winkel zu den Stützen und somit parallel zu dem Querträger wird dann eine Abweisstange an den freien Enden der Stützen derart befestigt, daß sie den Freiraum zwischen den Polen im wesentlichen voll übergreift. Mit dieser Anordnung wird den Vögeln ein Sitzplatz außerhalb der unmittelbaren Nähe von spannungsführenden Teilen angeboten. Nachteilig hierbei ist zunächst die relativ aufwendige Befestigung sowie eine Anfälligkeit der gesamten Vorrichtung hinsichtlich Belastungen durch Windkräfte, welche bei Schneelast oder Vereisung die gesamte Abweisvorrichtung und im ungünstigsten Fall somit auch spannungsführende Teile beschädigen können. Zudem steht bei einem derartigen Aufbau auch weiterhin die Gefahr, daß ein Vogel mit seinen ausgebreiteten Flügeln in den Bereich von spannungsführenden Teilen gerät und getötet wird, wenn er nach unten abfliegt, was bei vielen Raubvögeln der Fall ist.

Aus dem deutschen Gebrauchsmuster G 86 12 421 U1 ist ferner ein dreipoliger Hochspannungs-Freiluftschalter mit einem Querträger bekannt, auf dem im Abstand voneinander die Schaltpole befestigt sind, und mit einer auf dem Querträger abgestützten Abweisvorrichtung für Vögel. Diese weist ein wenigstens annähernd V-förmiges Abweisteil auf, welches im Bereich seiner Spitze auf dem Querträger befestigt ist. Diese Anordnung hat sich in der Praxis durchaus bewährt, da sie größeren Vögeln zuverlässig verwehrt, in gefährliche Nähe von spannungsführenden Teilen zu geraten, wobei dies mit einem Minimum an Material- und Kostenaufwand realisierbar ist. Hierbei wird dieser Vogelabweiser auf einfache Weise mittels einem Spannband oder durch Verschraubung mit bereits vorhandenen Bohrungen bzw. Gewinden auf dem Querträger fixiert, so daß auch eine Nachrüstung an sich problemlos möglich ist. Um ein Verdrehen der Abweisvorrichtung im Zuge der Montage zu verhindern, kann zudem auch eine Platte mit aufgerauhter Oberfläche zwischen dem Vogelabweiser und dem Querträger angeordnet sein. Da die Abweisvorrichtung bei dieser bekannten Bauweise zudem aus einem elektrisch isolierenden Kunststoff ausgebildet ist, wird die Funktion der Freileitungsanordnung durch diesen Vogelabweiser auch nicht beeinträchtigt.

Dennoch weist auch diese Bauweise in Analogie zu den eingangs erläuterten weiteren Lösungsansätzen den wesentlichen Nachteil auf, daß die Montage des Vogelabweisers im wesentlichen auf der Oberseite des Querträgers zu erfolgen hat, d. h. im Bereich zwischen den Polen des Freileitungsmastens. Die damit verbundene Gefahr eines Kontakts mit spannungsführenden Teilen ist für einen Monteur nicht akzeptabel, weshalb diese Tätigkeit nur bei vom Netz getrennten Leitungen durchgeführt werden kann und darf. Damit soll die Sicherheit des Monteurs gewährleistet werden, auch wenn dieser unbeabsichtigt mit einem Teil des Vogelabweisers oder direkt mit einer Leitung in Berührung kommt. Wie bereits erläutert wurde, ist das Abschalten von Freileitungen in der Praxis jedoch sehr problematisch, da für einen zeitweiligen Stromausfall in der Bevölkerung kaum Akzeptanz besteht. Daher versucht man die spannungsfreien Zeiten möglichst zu begrenzen. Dies bedingt jedoch wiederum einen hohen logistischen und technischen Aufwand, was mit zusätzlichen Kosten neben der entfallenen Stromabnahme führt.

Der Erfindung liegt daher die Aufgabe zugrunde, einen Vogelabweiser für Mittelund Hochspannungs-Freileitungen derart auszugestalten, daß er mit geringerem Montageaufwand bei möglichst hoher Sicherheit für die montierende Person an einem Querträger eines Freileitungsmastens angebracht werden kann.

Diese Aufgabe wird durch einen Vogelabweiser mit den Merkmalen des Anspruches 1 gelöst. Dieser zeichnet sich insbesondere dadurch aus, daß die Lagervorrichtung ein Lagergestell sowie eine Haltevorrichtung aufweist, wobei das Lagergestell derart mit einer Einführöffnung versehen ist, daß es auf den Querträger aufsetzbar ist und diesen zum temporären Sichern des Vogelabweisers gegen ein Herabfallen umgreift, und wobei die Haltevorrichtung zum Fixieren des Lagergestells am Querträger von der der Abweisvorrichtung gegenüber liegenden Seite des Vogelabweisers zugänglich ist.

Gemäß der vorliegenden Erfindung ist es somit erstmals möglich, alle Montagetätigkeiten von unterhalb des Querträgers des Freileitungsmastens oder dgl. auszuführen, d. h. von der den spannungsführenden Freileitungen abgewandten Seite am Freileitungsmasten. Damit kann die Gefahr eines direkten Kontakts mit den Polen deutlich reduziert werden. Zudem vereinfacht sich der Montageaufwand und reduziert sich der Zeitbedarf hierfür gegenüber dem Stand der Technik wesentlich, da das Lagergestell temporär stabil auf den Querträger aufsetzbar ist und der Monteur somit weniger Aufmerksamkeit darauf richten muß, daß der Vogelabweiser nicht vom Freileitungsmasten fällt. Da die Haltevorrichtung zum Fixieren des Lagergestells am Querträger zudem von der Unterseite des Querträgers zugänglich ist, kann auch der aufwendige Montageschritt zur Festlegung des Lagergestells und somit des Vogelabweisers am Freileitungsmasten von der Unterseite des Querträgers her durchgeführt werden. Daher vereinfacht sich die Montage und die Gefahr für die montierende Person kann deutlich verringert werden.

Der erfindungsgemäße Vogelabweiser läßt sich somit besonders einfach, zuverlässig und schnell an einem Freileitungsmasten anordnen.

Vorteilhafte Weiterbildungen der Erfindung sind Gegenstand der abhängigen Ansprüche 2 bis 9.

So kann die Haltevorrichtung als Klemmvorrichtung ausgebildet sein, was einerseits eine besonders einfache Montage ermöglicht und andererseits eine zuverlässige Fixierung des Lagergestells am Querträger zuläßt.

Hierbei kann die Klemmvorrichtung eine Klemmschraube enthalten, welche ein Mitnahmeteil aufweist. Damit kann auf einfache Weise mit einem komplementär zum Mitnahmeteil ausgebildeten Werkzeug eine zuverlässige Klemmwirkung entfaltet werden. Eine derartige Verbindung zeichnet sich durch eine hohe Klemmkraft sowie einfache Vorgänge zur Herstellung dieser Klemmkraft aus. Dabei liegt das Mitnahmeteil vorzugsweise in Gestalt eines Querstifts oder eines Mehrkantkopfes an der Klemmschraube vor, wodurch mit einfachen geometrischen Gestalten auch im Hinblick auf das verwendete Werkzeug eine zuverlässige Mitnahme und somit Betätigung der Klemmschraube erzielt werden kann.

Von weiterem Vorteil für die Erfindung ist es, wenn dem Vogelabweiser ferner eine Montagestange zugeordnet ist, welche mit der Haltevorrichtung zur Führung und Fixierung des Lagergestells am Querträger zusammenwirkt. Damit wird sozusagen ein ferngesteuertes Aufsetzen des Vogelabweisers auf dem Querträger des Freileitungsmastens ebenso ermöglicht, wie eine Festlegung desselben an dieser Stelle. Hierdurch wird der besondere Vorteil erzielt, daß die montierende Person in einem größeren Abstand von Polen der Freileitung verbleiben kann, so daß insbesondere auch der in den VDE-Vorschriften geforderte Minimalabstand von 2 m zu spannungsführenden Teilen eingehalten werden kann. Damit ist es auch bei den strengen Vorschriften in der Bundesrepublik Deutschland möglich, den erfindungsgemäßen Vogelabweiser an Mittel- und Hochspannungs-Freileitungen nachzurüsten, ohne daß diese abgeschaltet werden müssen. Auf diese Weise können die mit einer Stromabschaltung verbundenen, eingangs erläuterten Nachteile gänzlich vermieden werden, wodurch eine derartige Nachrüstung mit bedeutend geringerem Aufwand und unter geringeren Kosten durchgeführt werden kann. Somit liegt gemäß dieser Weiterbildung der Erfindung erstmals ein Vogelabweiser vor, der im normalen Betrieb der Freileitung montiert werden kann, wodurch sich sowohl die Bereitschaft als auch die technische Möglichkeit zur Nachrüstung der Anlagen deutlich vergrößern.

Hierbei kann die Montagestange ähnlich wie eine herkömmliche Erdungsstange ausgebildet sein. Alternativ ist es jedoch auch möglich, daß die Montagestange speziell ausgestaltet ist und an einem Ende einen Montageabschnitt zur Aufnahme und Führung der Lagervorrichtung sowie am gegenüber liegenden Ende einen Betätigungsabschnitt aufweist, der über den Montageabschnitt mit der Haltevorrichtung am Vogelabweiser zur Fixierung des Vogelabweisers am Querträger zusammenwirkt. Damit wird eine speziell auf die vorliegenden Bedürfnisse angepaßte Montagestange bereitgestellt, mit der eine zuverlässige Aufnahme und Führung des Vogelabweisers ebenso möglich ist, wie eine einfache Montage. Insbesondere ist es dann auch möglich, daß die Montage von einer einzelnen Person beispielsweise von einer Hubarbeitsbühne aus problemlos durchgeführt werden kann. Hierdurch verringert sich der Montageaufwand nochmals wesentlich.

Ferner kann der Montageabschnitt topfförmig ausgebildet sein und die Haltevorrichtung derart übergreifen, daß er in Eingriff mit dem Mitnahmeteil an der Klemmschraube vorliegt. Hierdurch verbessern sich sowohl die Führungseigenschaften für das Aufsetzen des Vogelabweisers auf dem Querträger des Freileitungsmastens als auch die Fixierung desselben aufgrund des zuverlässigen Eingriffs mit dem Mitnahmeteil an der Klemmschraube. Ferner wird dies mit erstaunlich einfachen konstruktiven Mitteln erreicht, wodurch eine hohe Zuverlässigkeit des Montagevorgangs erzielt wird.

Von weiterem Vorteil ist es, wenn der Betätigungsabschnitt eine Handkurbel aufweist. Dann kann die für eine zuverlässige Fixierung des Vogelabweisers an dem Querträger erforderliche Klemmkraft mit geringem Aufwand bereitgestellt werden.

Ferner ist es möglich, daß die Montagestange einen von Seiten des Betätigungsabschnitts bedienbaren Lösebügel aufweist, der mit Arretierelementen im Montageabschnitt zum Lösen oder Arretieren der Montagestange an der Haltevorrichtung zusammenwirkt. Damit wird vorteilhafterweise eine besonders einfache Möglichkeit zum Anund Abkoppeln der Montagestange vom Vogelabweiser erzielt, ohne daß sich der Monteur herzu spannungsführenden Teilen nähern müßte. Die Bedienung der Montagestange vereinfacht sich dadurch weiter, wodurch eine noch schnellere und mit geringeren Gefahren versehene Montage des Vogelabweisers ermöglicht wird.

Darüber hinaus kann die Montagestange elektrisch isolierend ausgebildet sein, wodurch sich die Sicherheit für den Monteur weiter erhöhen läßt, auch wenn die Freileitung nicht abgeschaltet ist.

Gemäß einem weiteren Aspekt der vorliegenden Erfindung wird nach Anspruch 10 eine Montagestange für einen erfindungsgemäßen Vogelabweiser bereitgestellt, welche als Zubehörteil einer Liefereinheit für einen Vogelabweiser oder eine Mehrzahl von Vogelabweisern zugeordnet sein kann. So kann beispielsweise für hundert Vogelabweiser eine Montagestange vorgesehen sein. Hierbei kann die Montagestange jedoch ebenso wie der erfindungsgemäße Vogelabweiser eine separate Handelseinheit darstellen. Dabei zeichnet sich die erfindungsgemäße Montagestange durch eine einfache konstruktive Gestaltung sowie eine kostengünstige Bereitstellung und hohe Zuverlässigkeit aus.

Ferner kann die Montagestange mit den oben ausführlich erläuterten Merkmalen weitergebildet sein, so daß sich die entsprechenden Vorteile erzielen lassen.

Die Erfindung wird nachfolgend in Ausführungsbeispielen anhand der Figuren der Zeichnung näher erläutert. Es zeigen:
- Fig. 1: eine Vorderansicht des erfindungsgemäßen Vogelabweisers;
- Fig. 2: eine Seitenansicht des erfindungsgemäßen Vogelabweisers;
- Fig. 3: die dem erfindungsgemäßen Vogelabweiser zugeordnete Montagestange; und
- Fig. 4: den Montageabschnitt der Montagestange im Detail.

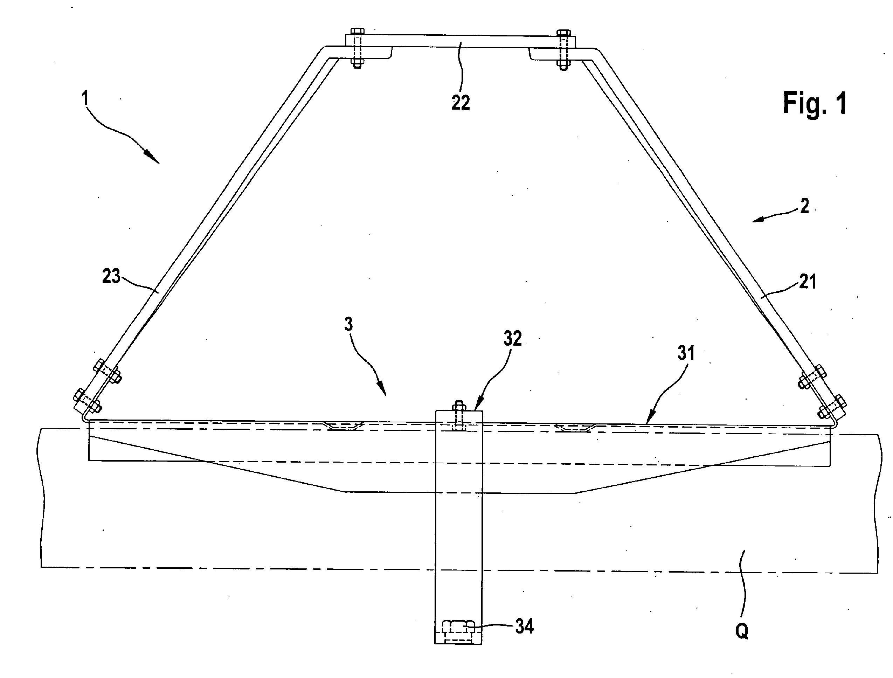

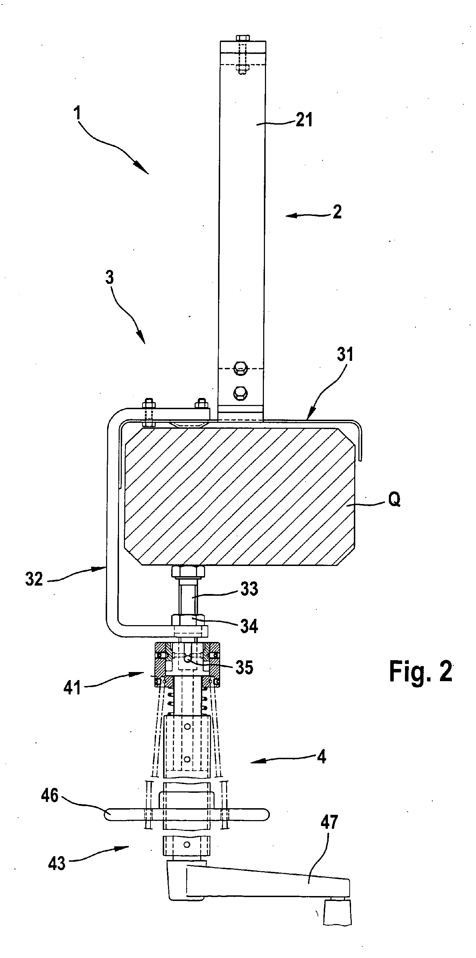

Gemäß der Darstellung in den Fig. 1 und 2 weist ein Vogelabweiser 1 eine Abweisvorrichtung 2 und eine Lagervorrichtung 3 auf. Die Abweisvorrichtung 2 enthält Abweisstäbe 21, 22 und 23, welche ein Trapez über der Lagervorrichtung 3 aufspannen, an welche sie angekoppelt sind. Die in dieser Ausführungsform gezeigte Abweisvorrichtung 2 bietet Vögeln eine erhöhte Sitzposition an, welche beabstandet von den Polen der Freileitung vorliegt. Alternativ ist es auch möglich, daß die Abweisvorrichtung z. B. im wesentlichen V-förmig ausgebildet ist, wie dies in der G 86 12 421 U1 gezeigt ist. Die Abweisstäbe 21, 22 und 23 sind ferner aus GFK ausgebildet und somit elektrisch nicht leitend.

Die Lagervorrichtung 3 enthält ein Lagergestell 31 und eine Haltevorrichtung 32, welche miteinander verbunden sind. Das Lagergestell 31 ist, wie insbesondere in Fig. 2 erkennbar ist, im Querschnitt U-förmig ausgebildet, so daß es einen Querträger Q eines Freileitungsmastens beidseits umgreift und flächig auf dem Querträger Q aufliegt. Durch den Umgriff sowie die gewählte Längserstreckung (vgl. Fig. 1) liegt das Lagergestell 31 und damit die Abweisvorrichtung 2 zuverlässig und verdrehsicher auf der Querstrebe Q auf, auch wenn der Vogelabweiser noch nicht entgültig festgelegt ist. Das Lagergestell 31 ist hierbei aus einem Stahlblech ausgebildet und über den Querträger Q geerdet. Ferner weist es zwei beabstandete Sicken auf, welche dem Querträger Q zugewandt sind und für eine definierte Auflage sorgen bzw. ein Gegenlager für eine Klemmschraube 33 der Haltevorrichtung 32 herstellen. Die Klemmschraube 33 ist nur in Fig. 2 dargestellt.

Die Haltevorrichtung 32 ist aus einem Flachstahl ausgebildet und liegt in einer U-Form derart vor, daß ein Schenkel auf der Oberseite des Querträgers Q mit dem Lagergestell 31 fest verbunden ist, während der andere, auf der Unterseite des Querträgers Q zu liegen kommende freie Schenkel der Haltevorrichtung 32 eine eingepreßte Mutter 34 trägt, mit der die Klemmschraube 33 zusammenwirkt. In der vorliegenden Ausführungsform ist die Klemmschraube 33 an sich als herkömmliche Sechskantschraube gemäß DIN 933 ausgebildet, wobei jedoch im Endbereich des Gewindes ein Querstift angeordnet ist, der die Klemmschraube 33 quer zu deren Längserstreckung durchgreift und beidseits ein vorbestimmtes Maß übersteht. Dieser Querstift dient als Mitnahmeteil 35.

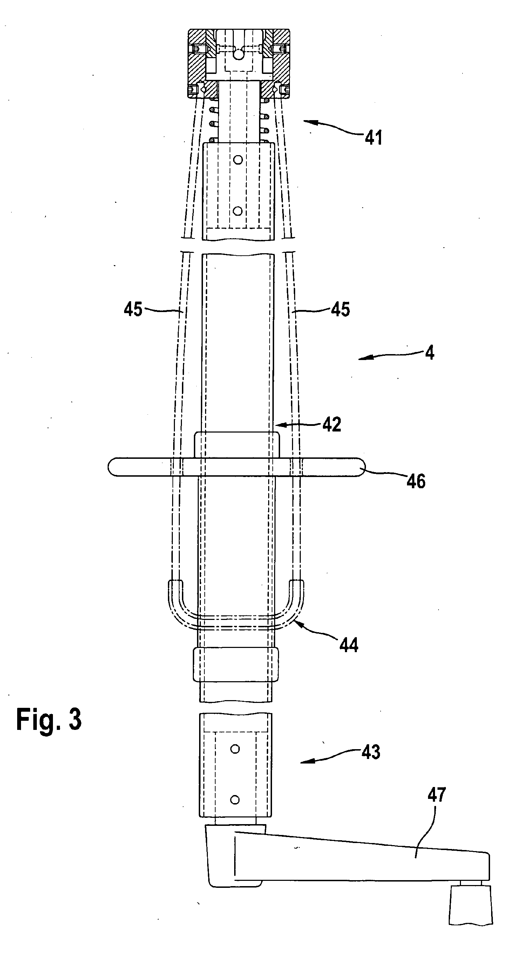

Dem Vogelabweiser 1 ist gemäß der Darstellung in Fig. 2 ferner eine Montagestange 4 zugeordnet, welche eine vorbestimmte Länge von ca. 2 m aufweist, damit eine mit der Montage des Vogelabweisers 1 befaßte Person den Mindestabstand von spannungsführenden Teilen von 2 m gemäß den VDE-Vorschriften einhalten kann. Gemäß der Darstellung in den Fig. 2 bis 4 weist die Montagestange 4 einen Montageabschnitt 41, einen stangenförmigen Mittelabschnitt 42 und einen Betätigungsabschnitt 43 auf. Ferner enthält sie einen Lösebügel 44 mittels dem der Montageabschnitt 41 der Montagestange 4 von seiten des Betätigungsabschnitts 43 zum An- bzw. Abkoppeln der Montagestange 4 von der Haltevorrichtung 32 betätigbar ist.

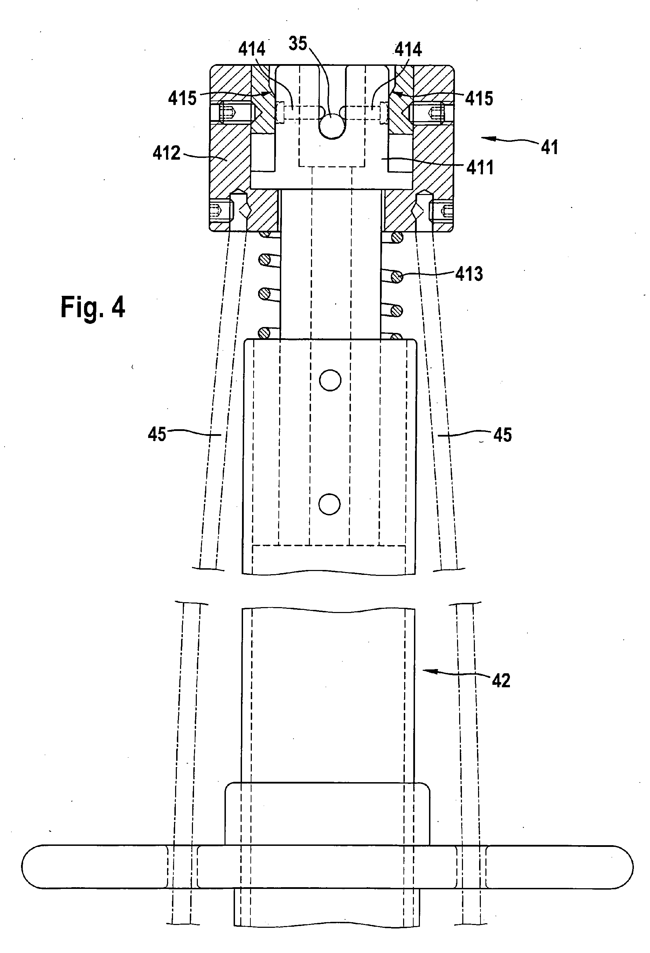

Wie insbesondere aus Fig. 4 erkennbar ist, ist der Montageabschnitt im wesentlichen topfförmig ausgebildet, so daß er den Gewindeabschnitt der Klemmschraube 33 und insbesondere das Mitnahmeteil 35 zur Herstellung einer Führungsfunktion übergreift. Der Montageabschnitt 41 enthält hierbei ein fest an den Mittelabschnitt 42 angekoppeltes Verbindungsteil 411, welches unmittelbar mit der Klemmschraube 33 zusammenwirkt. Hierzu weist der endseitige Hülsenabschnitt des Verbindungsteiles 411 zwei radiale Schlitze auf, in welche das stiftförmige Mitnahmeteil 35 formschlüssig eingreift, um hierdurch eine Mitnahme des Klemmschraube 33 zur Fixierung des Lagergestells 31 zu ermöglichen.

Umfangsseitig um das Verbindungsteil 411 ist eine längsverschieblich gelagerte Außenhülse 412 angeordnet, welche mittels einer Feder 413 gegenüber den Mittelabschnitt 42 der Montagestange 4 federnd bis auf Anschlag in Richtung zum Ende der Montagestange 4 vorgespannt ist. Ferner sind im Verbindungsteil 411 wenigstens zwei als Arretierelemente dienende Arretierstifte 414 angeordnet, welche in der in Fig. 4 gezeigten Stellung durch die Außenhülse 412 derart radial nach innen im Verbindungsteil 411 gehalten sind, daß sie das Mitnahmeteil 35 der Klemmschraube 33 formschlüssig umgreifen, d.h. in den Schlitzen einschließen. Dadurch ist die Montagestange 4 an der Klemmschraube 33 arretiert. Ferner ist durch die vorbestimmte und angepaßte topfförmige Gestalt des Montageabschnitts 41 im Zusammenwirken mit den Abmessungen der Klemmschraube 33 gewährleistet, daß die Lagervorrichtung 3 zuverlässig mittels der Montagestange 4 geführt werden kann.

Wie aus Fig. 4 zudem erkennbar ist, ist die Außenhülse 412 zweiteilig ausgebildet und mit einer Stufe 415 versehen, welche zum Lösen der Verbindung des Montageabschnitts 41 mit der Klemmschraube 33 mit den Arretierstiften 414 zusammenwirkt, wie nachfolgend noch im Detail erläutert wird. Der Montageabschnitt 41 ist außerdem noch mit zwei Zugseilen 45 verbunden, welche mit dem Lösebügel 44 zusammenwirken.

Im Bereich des Betätigungsabschnitts 43 der Montagestange 4 ist neben dem Lösebügel 44 zudem eine Handschutzscheibe 46 und am Ende der Montagestange 4 eine Handkurbel 47 angeordnet. Mittels dieser Handkurbel 47 wird im Einsatz eine Drehkraft auf das Verbindungsteil 411 am Montageabschnitt 41 und somit über das Mitnahmeteil 35 auf die Klemmschraube 33 zur Fixierung der Lagervorrichtung 3 am Querträger Q hergestellt.

Nachfolgend wird nun der Montagevorgang zur Anbringung des Vogelabweisers 1 an einen Querträger Q eines Freileitungsmastens erläutert.

Zunächst koppelt der Monteur die bereits werkseitig miteinander verbundene Abweisvorrichtung 2 und Lagervorrichtung 3 an die Montagestange 4 an. Dann greift er diese Einheit auf und bewegt sich mit einer Hubarbeitsbühne oder dgl. bis unterhalb dem Querträger Q des Freileitungsmastens, wobei er darauf achtet, daß er den vorgeschriebenen Mindestabstand zu spannungsführenden Teilen einhält, so daß eine Abschaltung des Stromes nicht erforderlich ist. Mit der Montagestange 4 führt der Monteur dann den Vogelabweiser zum Querträger Q und setzt ihn hierauf ab, wobei der Vogelabweiser 1 durch die an der Lagervorrichtung 3 vorliegende Einführöffnung für den Querträger Q über diesen geführt werden kann.

Da das Lagergestell 31 den Querträger Q im aufgesetzten Zustand formschlüssig umgreift, kommt die Abweisvorrichtung 2 zusammen mit der Lagervorrichtung 3 im wesentlichen stabil auf dem Querträger Q zu liegen, so daß diese temporär hierauf gesichert sind.

Anschließend betätigt der Monteur die Handkurbel 47, wodurch die Klemmschraube 33 in Drehung versetzt und der Vogelabweiser klemmend am Querträger Q festgelegt wird. Die Montage des Vogelabweisers 1 ist damit beendet.

Zum Lösen der Montagestange 4 von der Lagervorrichtung 3 zieht der Monteur nun mit einer Hand am Lösebügel 44, wodurch die Außenhülse 412 am Montageabschnitt 41 aufgrund der Wirkung der Zugseile 45 gegen die Vorspannkraft der Feder 413 nach unten in Richtung zum Mittelabschnitt 42 gezogen wird. Hierbei wird die Anlage zwischen der Außenhülse 412 und den Arretierstiften 414 dadurch aufgehoben, daß die Stufe 415 zur Wirkung kommt, d.h. ein Abschnitt mit größerem Durchmesser im Bereich der Arretierstifte 414 vorliegt. Zieht der Monteur nun die Montagestange 4 insgesamt nach unten weg von der Lagervorrichtung 3, dann können die Arretierstifte 414 somit seitlich ausweichen und geben das Mitnahmeteil 35 an der Lagervorrichtung 3 frei. Die Verbindung zwischen der Montagestange 4 und der Lagervorrichtung 3 ist damit aufgehoben. Der Monteur kann dann mit der Montagestange 4 zu einem anderen Freileitungsmasten gehen und einen weiteren Vogelabweiser 1 montieren. Die Ankopplung der Lagervorrichtung 3 an die Montagestange 4 erfolgt dabei im wesentlichen in umgekehrter Richtung wie der Entkopplungsvorgang, d. h. es wird der Lösebügel 44 gezogen und das Verbindungsteil 411 über die Klemmschraube 33 geschoben, bis das Mitnahmeteil 35 an seiner vorbestimmten Position ist. Dann wird der Lösebügel 44 freigegeben und die Außenhülse 412 gleitet aufgrund der Vorspannkraft der Feder 413 weg vom Mittelabschnitt 42 der Montagestange 4, so daß die Arretierstifte 414 wieder in Anlage mit dem Abschnitt der Außenhülse 412 gelangen, der einen geringeren Innendurchmesser aufweist.

Die Erfindung läßt neben der gezeigten Ausführungsform weitere Gestaltungsansätze zu.

So ist es beispielsweise auch möglich, daß das Mitnahmeteil 35 an der Klemmschraube 33 mittels einer Bajonettverbindung oder dgl. mit dem Verbindungsteil 411 gekoppelt wird. Ferner kann das Mitnahmeteil auch beispielsweise in Gestalt eines Mehrkantkopfes oder dgl. ausgebildet sein.

Sofern es die Vorschriften erlauben, oder sofern eine Stromabschaltung in Kauf genommen wird, kann für die Montage des Vogelabweisers 1 auch auf die Montagestange 4 verzichtet werden und diese unmittelbar durch Einwirkung des Monteurs auf die Lagervorrichtung 3 bewerkstelligt werden. Überdies ist es auch möglich, die Lagervorrichtung auch auf andere Weise als durch Klemmung mit dem Querträger Q zu verbinden. So könnte beispielsweise auch eine Verschraubung von der Unterseite des Querträgers Q erfolgen.

Der Lösemechanismus zum Entkoppeln der Montagestange 4 von der Lagervorrichtung 3 könnte auch auf andere Weise ausgebildet sein. So ist es z. B. denkbar, daß die Zugseile 45 direkt auf die Arretierstifte 414 einwirken und diese beispielsweise gegen eine jeweilige Federvorspannung zurückziehen.

Ferner könnte auch die Gestalt des Montageabschnitts 41 von der dargestellten topfförmigen Ausführungsform abweichen. Dabei soll der Montageabschnitt 41 jedoch weiterhin komplementär zum entsprechenden Gegenstück an der Haltevorrichtung 32, wie hier der Klemmschraube 33 mit dem Mitnahmeteil 35, ausgebildet sein, um eine zuverlässige Führung des Vogelabweisers 1 mittels der Montagestange 4 zu ermöglichen. Alternativ ist es jedoch auch möglich, daß die Führungsfunktion räumlich von der Klemmschraube 33 o. dgl. getrennt verwirklicht wird, d.h. an der Montagestange 4 weiter Einrichtungen ausgebildet sind, welche eine zuverlässige Führung der Lagervorrichtung 3 zulassen.

## Patentansprüche

1. Vogelabweiser (1) für Mittel- und Hochspannungs-Freileitungen, mit einer Abweisvorrichtung (2) sowie einer Lagervorrichtung (3) zur Befestigung der Abweisvorrichtung (2) an einem Querträger (Q) eines Freileitungsmastens,
**dadurch gekennzeichnet,**
**daß** die Lagervorrichtung (3) ein Lagergestell (31) sowie eine Haltevorrichtung (32) aufweist, wobei das Lagergestell (31) derart mit einer Einführöffnung versehen ist, daß es auf den Querträger (Q) aufsetzbar ist und diesen zum temporären Sichern des Vogelabweisers (1) gegen ein Herabfallen umgreift, und wobei die Haltevorrichtung (32) zum Fixieren des Lagergestells (31) am Querträger (Q) von der der Abweisvorrichtung (2) gegenüberliegenden Seite des Vogelabweisers (1) zugänglich ist.

2. Vogelabweiser nach Anspruch 1, **dadurch gekennzeichnet, daß** die Haltevorrichtung (32) als Klemmvorrichtung ausgebildet ist.

3. Vogelabweiser nach Anspruch 2, **dadurch gekennzeichnet, daß** die Klemmvorrichtung eine Klemmschraube (33) enthält, welche ein Mitnahmeteil (35), vorzugsweise in Gestalt eines Querstifts oder eines Mehrkantkopfes, aufweist.

4. Vogelabweiser nach einem der Ansprüche 1 bis 3, **dadurch gekennzeichnet, daß** ihm ferner eine Montagestange (4) zugeordnet ist, welche mit der Haltevorrichtung (32) zur Führung und Fixierung des Lagergestells (31) am Querträger (Q) zusammenwirkt.

5. Vogelabweiser nach Anspruch 4, **dadurch gekennzeichnet, daß** die Montagestange (4) an einem Ende einen Montageabschnitt (41) zur Aufnahme und Führung Lagervorrichtung (3) sowie am gegenüberliegenden Ende einen Betätigungsabschnitt (43) aufweist, der über den Montageabschnitt (41) mit der Haltevorrichtung (32) am Vogelabweiser (1) zur Fixierung des Vogelabweisers (1) am Querträger (Q) zusammenwirkt.

6. Vogelabweiser nach Anspruch 5, **dadurch gekennzeichnet, daß** der Montageabschnitt (41) topfförmig ausgebildet ist und die Haltevorrichtung (32) derart übergreift, daß er in Eingriff mit dem Mitnahmeteil (35) an der Klemmschraube (33) vorliegt.

7. Vogelabweiser nach Anspruch 5 oder 6, **dadurch gekennzeichnet, daß** der Betätigungsabschnitt (43) eine Handkurbel (47) aufweist.

8. Vogelabweiser nach einem der Ansprüche 5 bis 7, **dadurch gekennzeichnet, daß** die Montagestange (4) einen von Seiten des Betätigungsabschnitts (43) bedienbaren Lösebügel (44) aufweist, der mit Arettierelementen (414) im Montageabschnitt (41) zum Lösen oder Arettieren der Montagestange (4) an der Haltevorrichtung (32) zusammenwirkt.

9. Vogelabweiser nach einem der Ansprüche 4 bis 8, **dadurch gekennzeichnet, daß** die Montagestange (4) elektrisch isolierend ausgebildet ist.

10. Montagestange (4) für einen Vogelabweiser (1) nach einem der Ansprüche 1 bis 4, welche an einem Ende einen Montageabschnitt (41) zur Aufnahme und Führung der Lagervorrichtung (3) des Vogelabweisers (1) sowie am gegenüberliegenden Ende einen Betätigungsabschnitt (43) aufweist, der über den Montageabschnitt (41) mit der Haltevorrichtung (32) am Vogelabweiser (1) zur Fixierung des Vogelabweisers (1) am Querträger (Q) zusammenwirkt.

11. Montagestange nach Anspruch 10, **dadurch gekennzeichnet, daß** sie gemäß einem der Merkmale der Ansprüche 6 bis 9 weitergebildet ist.
